Europäisches Patentamt

European Patent Office

Office européen des brevets

(11) Publication number: **0 319 164**
**A2**

# EUROPEAN PATENT APPLICATION

(21) Application number: 88310804.5

(22) Date of filing: 16.11.88

(51) Int. Cl.4: **G06K 7/10**

(30) Priority: 03.12.87 US 128299

(43) Date of publication of application:
**07.06.89 Bulletin 89/23**

(84) Designated Contracting States:
**AT BE CH DE ES FR GB GR IT LI LU NL SE**

(71) Applicant: **METROLOGIC INSTRUMENTS, INC.**
**P.O. Box 307 143 Harding Avenue**
**Bellmawr New Jersey 08031(US)**

(72) Inventor: **Knowles, Carl Harry**
**425 East Linden Street Moorestown**
**Burlington New Jersey 08057(US)**

(74) Representative: **Shaw, Laurence**
**George House George Road**
**Edgbaston Birmingham B15 1PG(GB)**

(54) **Laser scanner.**

(57) A hand held laser scanner, for use in reading e.g U.P.C bar codes, comprises a housing (22) including a body portion (36) and a handle portion (38). A laser beam generator (62) together with its power supply form a replaceable unit (24) which is releasably mounted within the handle portion (38), so that the unit (24) may be easily replaced by unskilled personnel without damaging the optical components which are located within the body portion (38).

FIG. 3

## LASER SCANNER

This invention relates to laser scanners and more particularly to hand held laser scanners, e.g of the type used within supermarkets and the like to read the UPC bar codes found on grocery packaging.

Laser scanners have been disclosed in US-A-4,387,297, 4,409,470 4,460,120, 4,496,831, 4,575,625, 4,593,186, 4,607,156, 4,673,805, 4,736,095 and European patent publication EP-A-194115.

There is a need for a scanner which is light weight and compact and which may be easily assembled and serviced. There is also a need for such a scanner which provides superior scanning ability at long distances.

According to one aspect of the invention there is provided a hand held laser scanning apparatus, comprising a housing comprising a body portion and a handle portion, the housing containing a laser beam generator, a power supply therefor and optical components characterised in that the laser beam generator and the power supply are secured together to form a replaceable unit which is releasably mounted within the handle portion.

Preferably the optical components are exclusively located within the body portion so that removal of the replaceable unit cannot damage the optical components.

In another aspect there is provided a laser scanner including means mounted adjacent the window for adjusting the width of the beam.

In order that the invention may be better understood it will now be described with reference to the accompanying diagrammatic drawings, in which:

Fig. 1 is a perspective view of a laser scanner according to the invention;

Fig. 2 is an enlarged sectional view taken along line 2-2 of Fig. 1;

Fig. 3 is a sectional view taken along line 3-3 of Fig. 2;

Fig. 4 is a side elevational view, partially in section, of the handle portion of the apparatus shown in Fig. 1;

Fig. 5 is a sectional view taken along line 5-5 of Fig. 4; and

Fig. 6 is a plan view of a beam width adjusting/attenuator component forming part of the scanner of Fig. 1.

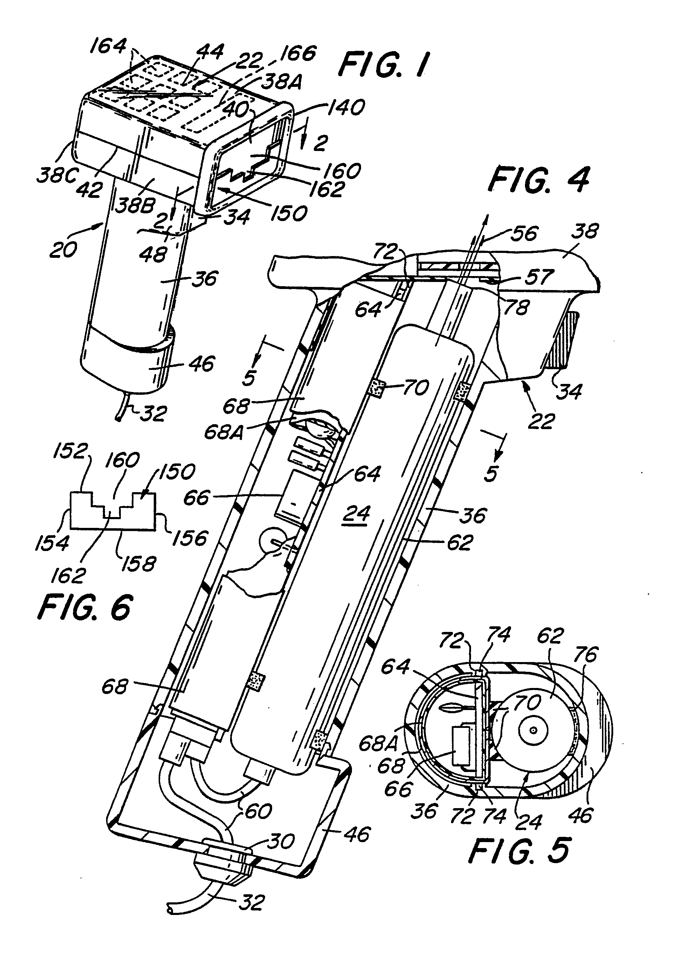

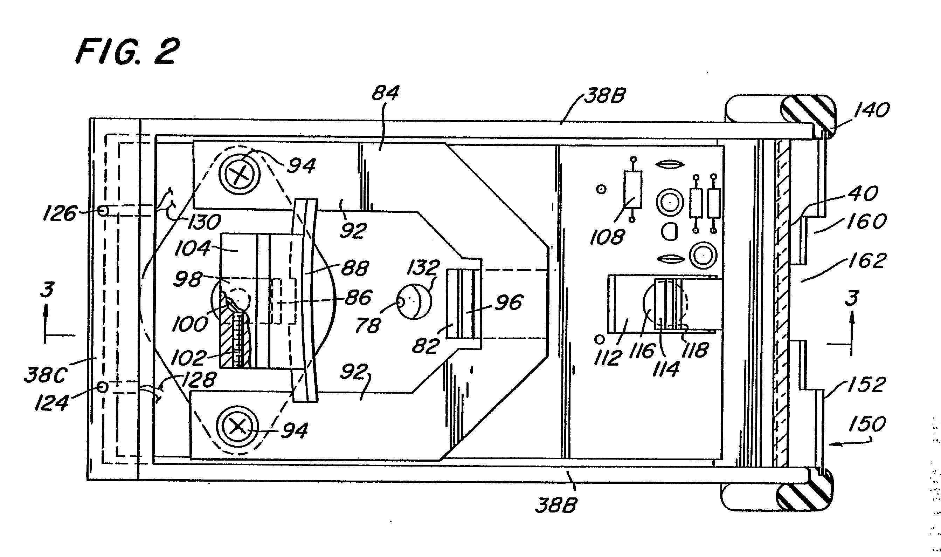

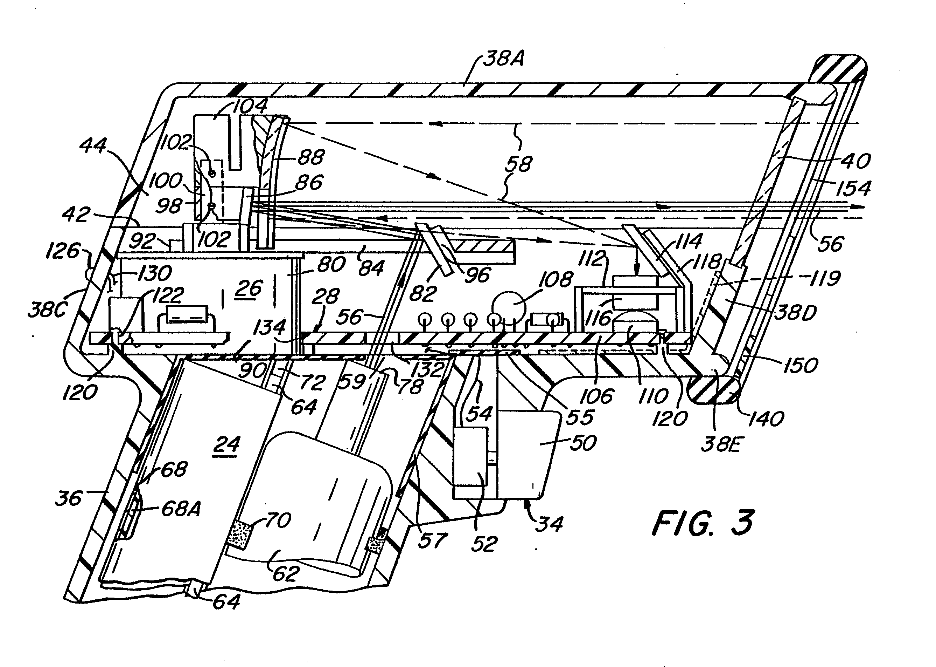

Apparatus 20 according to the invention comprises a compact ergonomic housing 22 (Figure 1), a laser tube and associated high voltage power supply sub-assembly 24 (Figures 3 and 4), a beam folding and sweeping optics and motor subassembly 26, a photodetector and associated amplification and signal processing subassembly 28, a releasable input/output cable connector or plug 30, an associated input/output cable 32, and an on/off trigger assembly 34.

The housing 22 includes a cylindrical handgrip portion 36 and an upper body portion 38. The body portion 38 is of generally parallelopiped shape, including a top wall 38A, an opposed pair of side walls 38B, a rear wall 38C, a front wall 38D (Fig 3) and a bottom wall 38E. The housing 22 is moulded from a relatively rigid plastics, such as a polycarbonate sold by the General Electric Company of America under the designation LEXAN. The plastic may be impregnated with e.g nickel particles to provide electrical shielding. The front wall 38D includes an opening in which a window 40 formed of an anti- reflective, wave-length selective glass, or other beam transparent material, e.g., plastic, is located.

The laser tube and associated high voltage power supply subassembly 24 is mounted within the housing's handle portion 36, and the other two subassemblies 26 and 28 are mounted within the body portion 38. The body portion 38 of the housing 22 is split horizontally along a peripheral seam line 42 to provide a removable upper cap or cover 44 so that access may be provided for the components mounted within the body portion 38. The lower (free end) of the handle portion 36 is closed by a releasably securable cap 46 to provide access to the subassembly 24.

Power for the device 20 is provided by either a 115 volt AC power pack (not shown), or a 24 volt battery-powered pack unit (not shown) including rechargeable batteries, or by plus 12 volts DC from a host terminal (not shown), via conductors within the cable 32 and which connects via a plug and socket 30 to the wiring harness 60 inside the housing.

The wiring harness 60 is releasably connected to the high voltage power supply 66 of the subassembly 24. The cable 32 also contains further conductors for the passage of data signals between the device 20 and a host terminal.

As shown in Figures 3, 4 and 5 the subassembly 24 comprises a conventional glass laser tube 62, a printed circuit board or card 64, and a high voltage power supply 66 of conventional, switchmode design.

The components forming the high voltage power supply 66 as well as a conventional ballast resistor assembly (not shown) are mounted on one side of the card 64. A shield 68, formed of a laminated sheet comprising an outer layer of an electrically conductive material, e.g copper, and an inner layer of an electrically insulating material, e.g MYLAR 68A, is wrapped about the high voltage power supply components 66 and the printed circuit card 64. The copper layer is earthed to electrically shield the device 20 from the power supply 66. The laser tube 62 is of conventional helium neon type and includes a laser light emitting end face 78, which is preferably ground to focus the laser beam.

The laser tube 62 is electrically connected to the power supply components 66 and is mounted onto the outside of the copper layer of the shield 68 by pieces of e.g resilient foam or RTV adhesive 70 placed between the shield 68 and the tube 62, and further pieces 76 placed between the inner surface of the housing's handle 36 and the outer surface of the laser tube assembly. In such a way the tube can absorb shock and withstand decelerations of 1400 MS$^{-2}$ or more without damage.

As shown in Figure 5, an opposed pair of elongated recesses or slots 72 extend within the inner wall of the handle portion 36 parallel to the longitudinal axis thereof. The opposed side edges of the printed circuit board 64 include at least two spaced apart ears or tabs 74 which are shaped to be tightly disposed within the recess 72.

The subassembly 24 may be placed within the handle portion 36 simply by removing the cap 46 and then sliding the subassembly 24 into the handle with the printed circuit card tabs 74 sliding along the recesses 72 to the condition shown in Figure 4. The cap 46 is replaced, once the necessary electrical connections have been made.

A trigger assembly 34 is located within a recess in a thickened wall portion 48 at the front of the handle portion 36 underneath the body portion 38. The trigger assembly 34 is isolated from potentially high voltages on the nearby laser power supply subassembly 24 by an electrically insulating barrier 49 which consists of the housing's hand grip portion. The trigger assembly 34 comprises a button 50 mounted onto the actuator of a conventional push-button electrical switch 52 which is electrically and releasably connected to the subassembly 28 via conductors 54. A plate 55 formed of an electrically insulating material is mounted over the opening through which the conductors 54 extend. A rubber cover 57 is mounted over the top end of the high voltage power supply assembly 24. The plate 55 and cover 57 serve as additional electrical insulators, while the plate 55 also serves as a moisture seal.

The subassembly 26 comprises a stepper motor 80 which rotates mirrors 86, 88 to sweep the laser beam. The motor 80 includes a housing 90 mounted within the body portion 38 of the housing 22 which is located and adhered upon positioning studs (not shown) which extend from the bottom wall of the body portion 38 adjacent the back wall 38C.

A mounting bracket 84 is mounted on top of the motor's housing 90 and is generally a V-shaped planar member (Figure 2) having a pair of legs 92, each of which is releasably secured to the top of the motor housing 90 by threaded fasteners 94. At the apex of bracket 84 is an angled flange 96 which includes a portion extending at an approximate 45 degree angle to the plane of the bracket 84. Mounted on the inside surface of the angled portion of the flange 96 is a deflecting mirror 82 which deflects the laser beam 56 from the tube 62 toward the beam sweeping (outgoing) mirror 86. The mirror 86 is of generally planar shape (but may be concave) and also serves as a beam shaping element.

The use of the outgoing mirror 86 to shape the beam avoids the need for additional lenses.

The outgoing mirror 86 is mounted by a bracket 98 and a set screw 102 on the output shaft 100 of the motor 80. The output shaft 100 is arranged to be reciprocated by the motor through an arc of approximately 14° -22° (i.e., plus or minus 7° - 11° from a neutral central position. The returning light 58 from the bar code is arranged to impinge on a receiving or collecting mirror 88. The collecting mirror 88 is spherical so that it will focus the light for receipt by a photodetector 110 of the subassembly 28. The focal length of mirror 88 is preferably in the order of 100 millimeters or more. The spherical collecting mirror 88 is mounted on a bracket 104, which is mounted via a set screw 102 on the output shaft 100 of the motor 60.

As shown in Figures 2 and 3 the subassembly 28 comprises a printed circuit board 106 on which are mounted signal processing circuitry and associated components 108, a light-receiving photodetector 110, a box-like filter and mounting bracket subassembly 112 and an incoming light deflecting mirror 114. The signal processing circuit board 106 is mounted within the body portion 38 upon plural positioning studs 120. The studs 120 project upwards from the wall 38E of the housing and extend through associated openings 122 in the printed circuit board. The printed circuit board 106 includes a central opening 132 through which the laser beam 56 passes from the laser tube 62 to the mirror 82 and also includes a second larger opening 134 through which the housing 90 of the motor 60 passes. The components 108 are of known type and comprise a photocell 110, a very high gain photocell preamplifier and associated amplifier, a microprocessor and various associated signal processing circuitry, as well as the low voltage power supply for the apparatus 20.

As shown in Figures 2 and 3, the device also includes two light emitting diodes 124 and 126 which are mounted in the back wall 38C of the body portion 38. The LED 124 is connected by conductors 128 to the signal processor circuitry 108 so that it is illuminated whenever the trigger button 50 is depressed to indicate that the device is powered and is in the "scan mode" of operation. The other LED 126 is connected by conductors 130 to the signal processing circuitry and is arranged to be illuminated when the circuitry of the signal processing board has decoded the bar code symbol scanned.

A box or shroud 112 is mounted on the top surface of the front end of the printed circuit board or card 106 and completely encloses the photocell 110 to prevent unwanted light from entering the photocell 110. The box 112 is preferably formed of metal to provide electrical shielding for the very high gain photocell preamplifier. A conventional band pass filter 116 is mounted within an opening (not shown) in the box 112 and is disposed over the photocell 110. The filter 116 and the optical components are designed to have a band pass for the wavelength of the particular laser beam e.g., if the laser is a helium-neon laser, the filter 116 has a band pass for radiation at a wavelength of 633 nanometers. The incoming light deflecting mirror 114 is mounted on a bracket 118 located on the front end of the box 112. The bracket 118 serves to further shield or shroud the filter and hence the photocell 110 from unwanted light entering the window 40.

The incoming laser beam 58 is focussed by the collecting mirror 88 onto the mirror 114 which deflects the beam into the photocell 110.

An electrically grounded copperfoil shield 119 (shown by the phantom lines in Figure 3) is provided under the front end of the board 106 and on the inner surface of front wall 38D to provide further electrical shielding.

As shown in Figure 1 the front end of the device 20 includes a bumper 140 surrounding the window 40. The bumper 140 is preferably formed of a resilient material, such as rubber, to serve as a shock absorber to protect the device in case it is dropped on its front end.

A beam width adjusting/attenuating component 150 is mounted within the bumper 140. The apparatus 20 projects a relatively wide laser beam out of the window 40 and while a wide beam is desirable for most scanning applications, in some cases it is preferable to have a narrower beam so that the beam can be aimed at only a single particular symbol out of a group of symbols e.g when scanning individual packages in a crowded shopping trolley.

A beam width adjusting/attenuating component 150 comprises a movable curtain 150. As shown in Figure 6, the curtain 150 comprises a generally planar plate having a top edge 52, a pair of side edges 154 and 156, and a bottom edge 158. A first wide slot 160 extends across the centre of the top edge 152 and a second narrower slot 162 extends across the plate underneath the first slot 160.

The curtain 150 is mounted over the front wall 38D of the housing with its edges 154 and 156 located within channels 164 (Figure 3) in the inner vertical sides of the bumper 140. The curtain 150 is arranged to be slid within the channels 164 to various positions (heights) with respect to the window 40 to adjust the width of the projected beam to any one of four conditions. In a first condition, as shown in Figure 1, the curtain is moved down to the lowest position and as the beam sweeps to and fro, it is unimpeded by the curtain 150. The curtain 150 may be moved upwards to a second condition so that the edges of slot 160 block off the marginal ends of the beam. The curtain may then be moved further upwards to a third condition, so that slot 162 further blocks off the ends of the beam. In the fourth condition the curtain is moved to the top of the channels 164, thereby entirely blocking the beam.

In use, depression of the trigger button 50 causes the laser beam generator 62 to produce a laser beam 56 which is directed out of the handle portion 36 through an opening 59 to impinge upon mirror 82. The laser beam is then deflected onto the outgoing mirror 86 which sweeps the beam through an arcuate path and directs it out of the front window 40 to impinge on a object e.g a bar code symbol (not shown) disposed up to 76 cm away from the window. The beam is then reflected by the bar codes, bars and spaces in a generally uniform spectral distribution, so that a portion of the reflected light 58 returns through the window 40. This returning light is focussed by the collecting mirror 88 onto the deflecting mirror 114, which directs it to the photodetector 110. The photodetector 110 and the associated signal processing circuitry produces digital TTL type signals which are decoded by a microprocessor (not shown) to provide conventional RS 232C signals (e.g ASCII characters). These data signals are sent via the cable 32 to any peripheral equipment such as a host computer, an electronic cash register, a memory bank, a modem, a printer, etc. Moreover, the output signals can be extended up to 288 kilobaud and may be used for light pen emulation.

The apparatus 20 is capable of scanning at a very fast rate, e.g 35-70 scans per second, for decoding various conventional bar codes, e.g UPC Type A, D, E, EAN, etc located up to 75 cm from the window 40. Lower density symbols can be scanned from a distance of 102 cm. The width of the scan field is approximately 4.3 cm at the window 40 and 30 cm at a distance of 38 cm from the window. The depth of field can be up to 102 cm depending upon the width and size of the bar codes.

The apparatus 20 is light weight, e.g approximately 340 gms, and extremely compact in size, e.g the body portion 38 can be approximately 9.3 cm long by 5.1 cm wide, and the overall height can be 19.9 cm and the handle portion 36 can be approximately 2.7 cm thick and 3.8 cm wide.

The scanner is extremely easy to use without causing fatigue because the apparatus is light and the centre of gravity acts through the users' hand.

The circuit board 64 holding the laser tube subassembly 24 is configured to fit tightly within the grooves 72 to enhance accurate positioning of the tube and hence accurate aiming of the beam. The printed circuit board 64 also stiffens the handgrip portion 36. In addition the optical elements of the device are mounted on their respective subassemblies 26 and 28 in critical alignment with one another. However, the subassemblies themselves 26, 28 need not be as critically aligned with each other in the housing. It is an advantage of this construction that a separate optical bench is not required because the housing 22 itself is rigid enough to ensure that any deflections of the handle or thermal distortions of the housing will have no significant effect on the path of the laser beam.

The modular nature of the subassembly 24, 26 and 28 mean that they are easily removable and the device is particularly easy to assemble and service.

In another embodiment in Figure 1 a plurality of keys is shown in ghost outline in the top wall of the housing 22. These keys 164 form a keyboard assembly so that data and/or instructions can be entered into the apparatus 20. A visual display panel 166, such as an alpha-numeric LCD display, may be provided to display the desired data or input instructions. Additional memory means (not shown) may also be included in such a device.

In another embodiment the photocell 110 and filter 116 may be mounted generally vertically on the board 106 in the path of the incoming light from the collecting mirror, which arrangement eliminates the need for mirror 114 and its mounting bracket 118. A low power lightweight solid state e.g infra red laser may easily be substituted for the laser tube.

## Claims

1) A hand held laser scanning apparatus (20) comprising a housing (22) comprising a body portion (38) and a handle portion (36), the housing (22) containing a laser beam generator (62), a power supply (66) therefor and optical components characterised in that the laser beam generator (62) and the power supply (66) are secured together to form a replaceable unit (24) which is releasably mounted within handle portion (36).

2) Apparatus according to Claim 1 characterised in that the optical components are exclusively located within the body portion (38), so that removal of the replaceable unit (24) cannot damage the optical components.

3) Apparatus according to Claim 1 or 2 characterised in that the laser beam generator (62) and the power supply (66) are mounted on a first printed circuit board (64), and the interior of the handle portion (38) is provided with at least one slot (72) arranged releasably to receive a portion of the board (64).

4) Apparatus according to any preceding Claim characterised in that signal processing circuitry (108) is located upon a second printed circuit board (106) mounted within the body portion (38) of the housing (22).

5) Apparatus according to Claim 4 characterised in that the signal processing circuitry (108) comprises at least one photocell (110) disposed in an enclosure (112) adjacent the window (40), the enclosure (112) being arranged to shield the photocell (110) from ambient light entering the window (40).

6) Apparatus according to Claim 4 or 5 characterised in that at least one optical component (114) is mounted upon the second printed circuit board (106).

7) Apparatus according to any preceding Claim characterised in that the optical components comprise a first mirror (86) for sweeping the laser beam in a path through the window (40), and a second mirror (88) for receiving the reflected laser light, and in that both of the mirrors (86, 88) are mounted upon the output shaft (100) of a motor (80).

8) Apparatus according to any preceding Claim characterised by means mounted adjacent the window (40) for adjusting the width of the beam.

9) Apparatus according to Claim 8 characterised in that the means comprises a plate (150) having at least one opening (160, 162) therein, which plate (150) is adjustable with respect to the window (40) between one extreme condition in which the full width of the laser beam is allowed to exit form the window (40) and another extreme condition in which the laser beam is blocked from exiting from the window (40).

10) Apparatus according to Claim 9 characterised in that the housing includes a shock absorbing bumper (140) to support the plate (150), the bumper (140) being disposed adjacent the window (40).

FIG. I

FIG. 4

FIG. 6

FIG. 5

FIG. 2

FIG. 3